Europäisches Patentamt

European Patent Office

Office européen des brevets

(11) Publication number: **0 431 243 A1**

## EUROPEAN PATENT APPLICATION

(21) Application number: **90110304.4**

(22) Date of filing: **30.05.90**

(51) Int. Cl.⁵: **G01P 3/489**

(30) Priority: **13.11.89 JP 292446/89**

(43) Date of publication of application:
**12.06.91 Bulletin 91/24**

(84) Designated Contracting States:
**DE ES FR IT NL**

(71) Applicant: **NIHON SEIMITSU SOKKI CO., LTD.**
**1125-7, Sekishita**
**Shibukawa City, Gunma Prefecture(JP)**

(72) Inventor: **Ishii, Ichinosuke**
**286-1, Nishi Nakanojo, Nakanojo-machi**
**Agatsuma-gun, Gunma Prefecture(JP)**

Inventor: **Seki, Kenju**
**1508 Iwamoto, Nakanojo-machi**
**Agatsuma-gun, Gunma Prefecture(JP)**
Inventor: **Ono, Yoshimasa**
**2975 Onoko, Onogamimura**
**Kitagunma-gun, Gunma Prefecture(JP)**
Inventor: **Ohshima, Kazuyoshi**
**474 Hatsusaki, Kita Tachibanamura**
**Seta-gun, Gunma Prefecture(JP)**

(74) Representative: **Münich, Wilhelm, Dr. et al**
**Willibaldstrasse 36**
**W-8000 München 21(DE)**

(54) **Speedometer for bicycle.**

(57) To eliminate wiring between a speed detector and a speed indicator of a speedometer for a bicycle and accomplish signal transmission between them in radio mode, the speedometer comprises a permanent magnet (3) attached to a wheel (1) of the bicycle; a transmitter (5) attached to a frame (4) that includes a magnetic detector (8), an oscillator (9), and a transmitting coil (11); and a receiver (7) attached to a handlebar (6) that includes a receiving coil (13), an amplifier (14), a computer (17), and an indicator (18). The transmitting coil (11) and the receiving coil (13) are disposed such that their axial lines (p) are in substantial alignment with each other to make magnetic coupling between them reliable. Preferably, the transmitter (5) and/or the receiver (7) is detachably attached.

Fig. 2

## SPEEDOMETER FOR BICYCLE

BACKGROUND OF THE INVENTION

Field of the Invention:

This invention relates to a speedometer from which a cyclist can readily read the travel speed and the like of a bicycle at any time.

Description of the Prior Art:

Conventional speedometers for the bicycle are configured such that a permanent magnet is attached to spokes of a wheel, a magnetic detector is secured to a proper portion of a frame so as to face the permanent magnet, and an indicator section is attached to a handlebar or the like in front of the cyclist. Specifically, each time the magnet faces the detector in response to the rotation of the wheel, the detector provides a pulse, and the indicator section indicates a speed corresponding to the frequency of pulses.

However, since signals in the prior art are transmitted using wires connected between the detector and the indicator section, the work of attaching the speedometer to the bicycle, especially the work of wiring, is troublesome and difficult for the user to accomplish, the wires degrade the external appearance of the bicycle, and the wires tend to be cut off when the bicycle is upset or is going to be put into a narrow bicycle shed.

SUMMARY OF THE INVENTION

It is an object of the present invention to provide a speedometer for a bicycle which is free from the foregoing defects of the prior art.

To accomplish the foregoing object, the present invention provides a speedometer for a bicycle which is characterized in that an oscillator of radio frequency responsive to the output of a magnetic detector is provided, a coil for receiving the radio frequency signal and an amplifier for amplifying the output of the receiving coil are provided in an indicator attached to the handlebar of the bicycle, the output signal of the amplifier is analyzed to obtain signals corresponding to the travel speed and other travel conditions of the bicycle, and the thus obtained signals are applied to the indicator. Accordingly, it is not necessary to lay any signal wires along the frame and the like of the bicycle, the work of attaching the speedometer is simple and can be performed readily and quickly by the user of the bicycle, and there is no fear that signal wires will be damaged through upsetting and the like to render the speedometer non-usable.

Further, since the indicator and the like can be readily attached and detached, such units can be prevented from being stolen by detaching them from the frame when the bicycle is not in use.

BRIEF DESCRIPTION OF THE DRAWINGS

The drawings show an embodiment of the present invention, in which
Fig. 1 is a fragmentary front view of a bicycle;
Fig. 2 is a fragmentary side view of the bicycle;
Fig. 3 is a block diagram of a speedometer;
Fig. 4 is a schematic diagram showing the positional relationship of units;
Figs. 5 and 6 are perspective views showing the way to attach a transmitter; and
Figs. 7 and 8 are perspective views showing the way to attach a receiver.

DESCRIPTION OF THE PREFERRED EMBODIMENT

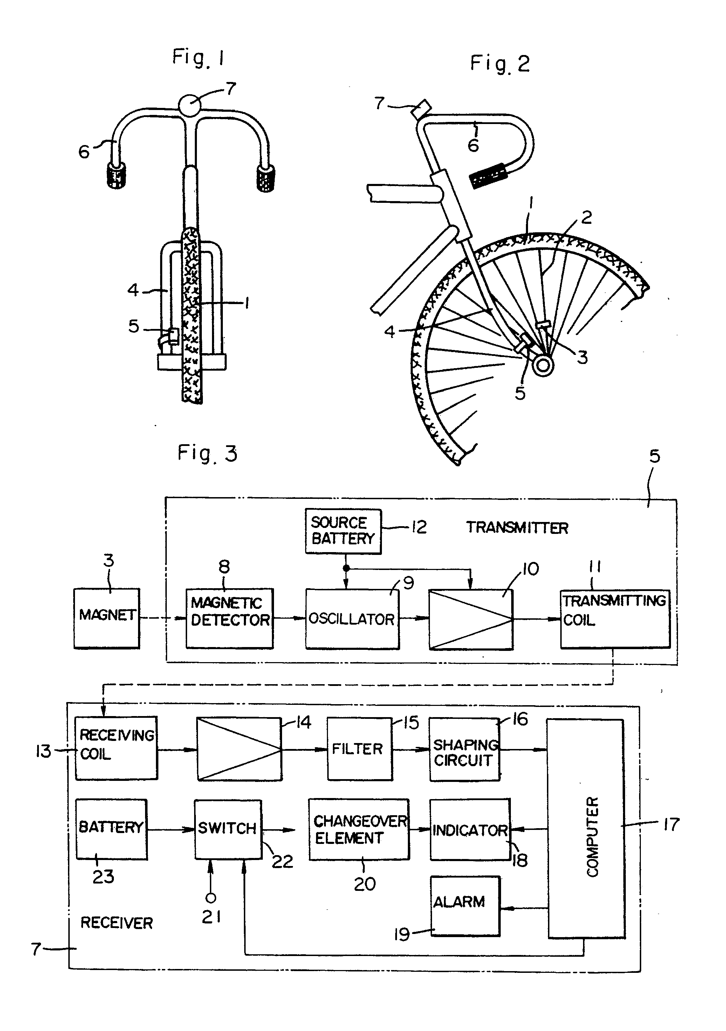

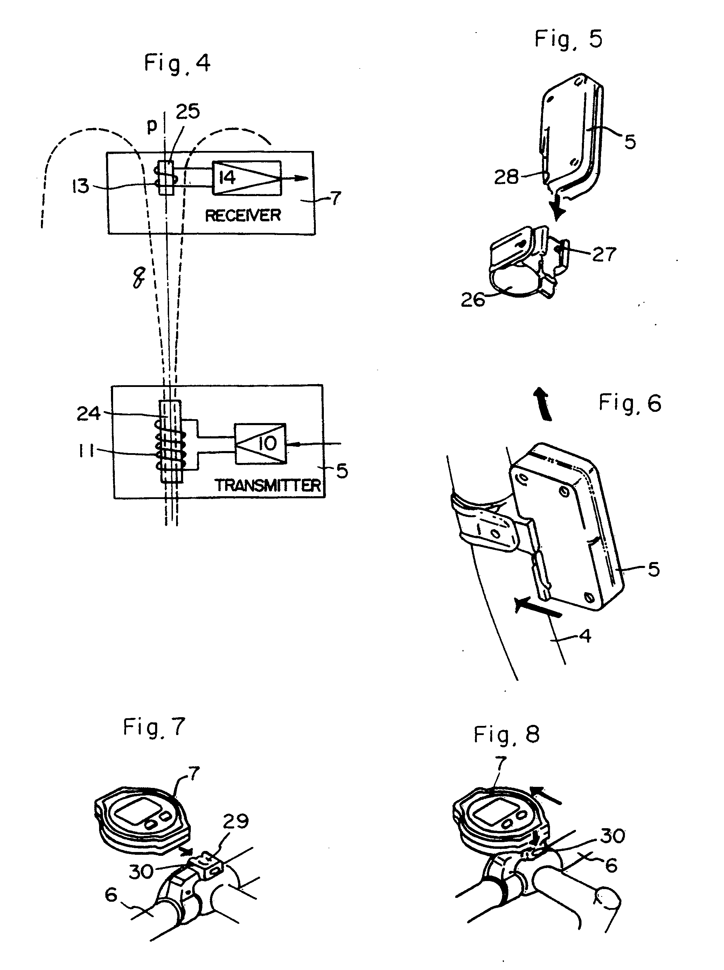

In Figs. 1 and 2 showing a bicycle with a speedometer according to the present invention, the speedometer comprises a small permanent magnet 3 secured to a proper portion of spokes 2 of a front wheel 1 of the bicycle by screws or the like, a radio transmitter 5 secured to a fork 4 of the front wheel so as to intermittently face the magnet, and a radio receiver 7 secured to a handlebar 6 in front of a cyclist. There is no wire connected between the transmitter 5 and the receiver 7, as well as between the magnet 3 and the transmitter 5, that is, these units are separately secured at proper positions as described above. In Fig. 3 showing the electrical structure of the speedometer, the magnet 3 is made of, for example, a bar magnet whose both ends define magnetic poles, and attached such that a straight line passing through both magnetic poles accords with the circumferential direction of the front wheel. The transmitter 5 comprises a magnetic detector 8, such as a reed switch, disposed at a position where it intermittently faces the magnet 3 in response to the rotation of the front wheel 1, an oscillator 9 for providing an output of certain frequency in response to the output of the magnetic detector 8, an amplifier for amplifying the output of the oscillator 9, a transmitting coil 11 to which the output of the amplifier 10 is applied, and a source battery 12 for powering the foregoing units. On the other hand, the receiver 7 comprises a receiving coil 13 for detecting an electromagnetic wave generated by the transmitting coil 11, an amplifier 14 for amplifying the output of the receiving coil 13, a filter 15 for receiving the output of the amplifier 14 and detecting a signal having the foregoing certain frequency, a shaping circuit 16 for receiving the output of the filter 15 and providing a detection output of certain waveform, a computer 17 for receiving the output of the shaping circuit 16, an indicator 18 made of, for example liquid crystal, for indicating the output signal of the computer 17, an alarm 19 actuated in response to a warning signal, a changeover element 20 for changing the indicating of the indicator 18, a switch 22 actuated by a signal applied to a manual control terminal 21 or the output signal of the computer 17, and a battery 23 for supplying a drive power through the switch 22 to the foregoing units. As shown in Fig. 4, the coil 11 included in the transmitter 5 has an iron core 24, the coil 13 included in the receiver 7 has an iron core 25, and the iron cores 24 and 25 are made to have the same axial line p such that the magnetic force of the iron core 24 is effectively coupled to the iron core 25.

In the speedometer of the foregoing structure, when the front wheel 1 rotates as the bicycle travels, the magnet 3 passes by a side portion of the transmitter 5 at a frequency corresponding to the travel speed of the bicycle; as a result, a signal pulse is provided from the magnetic detector 8 each time of passing. The oscillator 9 is actuated upon each application of the pulse to provide an output of certain frequency, the amplifier 10 amplifies the output of the oscillator 9 and applies to the coil 11, and the coil 11 generates an electromagnetic wave of certain frequency at a frequency proportional to the travel speed of the bicycle. The electromagnetic wave as illustrated by the broken line is detected by the coil 13 included in the receiver 7 attached to the handlebar, and the output of the coil 13 is applied, through the amplifier 14 and the filter 15 for detecting a signal having the foregoing certain frequency, to the shaping circuit 16. Upon each application of the signal, the shaping circuit 16 applies a rectangular pulse of certain duration to the computer 17. Consequently, the computer calculates or detects a travel speed signal proportional to the frequency of the foregoing pulses, a travel distance signal being obtained by accumulating the above signal, an elapsed time signal from a travel beginning moment, a mean speed signal, a maximum speed signal, and/or a signal indicating trips of the bicycle, and applies these signals to the indicator 18. Further, for example, when the travel speed increases abnormally on a downward slope or the like, a signal is applied to the alarm 19 to present an indication of danger. The electric circuit is configured so that the travel speed is contiguously indicated on the indicator 18 normally, but upon control of the changeover element 20, any desired one out of the foregoing various signals can be indicated on the indicator 18.

The coils 11 and 13 included in the transmitter 5 and the receiver 7 have the respective iron cores 24 and 25, which are disposed such that their axial lines p are in substantial alignment with each other; thus, the magnetic force q generated by the iron core 24 as illustrated by the dotted lines effectively passes through the iron core 25, that is, these iron cores are magnetically coupled together strongly. Therefore, the receiver reliably responds to the signal from the transmitter 5, and never causes any erroneous operations even under the circumstances of signals from other bicycles and the like and of other noise signals.

As shown in Fig. 5, by attaching a fixture 26 to the fork 4 of the front wheel and previously providing guide protrusions 28 on the transmitter 5 that are adapted to be fitted in guide grooves 27 formed in the fixture, the transmitter can be readily attached and detached in the directions of the arrows. Fig. 6 shows the transmitter 5 attached to the fork 4 using the foregoing mechanism. Further, as shown in Fig. 7, by attaching a fixture 30 with guide grooves 29 to the handlebar 6 and previously providing guide protrusions on the receiver 7 that are adapted to be fitted in the guide grooves 29, the receiver 7 can also be readily attached and detached in the directions of the arrows. Fig. 8 shows the receiver attached in the manner as above. In this way, the speedometer according to the present invention has no need to lay any wires along the frame,and the transmitter 5 and the receiver 7 can be readily attached and detached; thus, they can be prevented from being stolen by removal of them.

As described above, the speedometer according to the present invention has no need to lay any signal wires for connection of the transmitter 5 with the receiver 7; thus, these units are easy to attach, there is no fear of wire breaking even upon upsetting and the like, the reliability of the speedometer is enhanced, and each unit can be prevented from being stolen by removal of it when not in use.

## Claims

1. A speedometer for a bicycle comprising
a permanent magnet attached to a wheel of the bicycle,
a first combination attached to a frame of the bicycle that includes a magnetic detector disposed so as to face the circular travel path of the permanent magnet, an oscillator responsive to the output of the magnetic detector, and a transmitting coil applied with the output of the oscillator for generating an electromagnetic wave, and
a second combination attached to a handlebar of the bicycle in front of a cyclist that includes a receiving coil for detecting the electromagnetic wave generated by the transmitting coil, an amplifier applied with the output of the receiving coil, a computer for analyzing the output signal of the amplifier and providing signals corresponding to the travel conditions, inclusive of the travel signal, of the bicycle, and an indicator for indicating the output of the computer.

2. A speedometer for a bicycle according to claim 1, wherein the transmitting coil and the receiving coil are disposed such that their axial lines are in substantial alignment with each other.

3. A speedometer for a bicycle according to claim 1, further including means for detachably securing the first combination to the frame.

4. A speedometer for a bicycle according to claim 1, further including means for detachably securing the second combination to the handlebar.

Fig. 1

Fig. 2

Fig. 3

| SOURCE BATTERY 12 | TRANSMITTER |

MAGNET 3

MAGNETIC DETECTOR 8

OSCILLATOR 9

10

TRANSMITTING COIL 11

RECEIVING COIL 13

14

FILTER 15

SHAPING CIRCUIT 16

BATTERY 23

SWITCH

21 22

CHANGEOVER ELEMENT 20

INDICATOR 18

COMPUTER 17

ALARM 19

RECEIVER

7

5

## Fig. 4

## Fig. 5

## Fig. 6

## Fig. 7

## Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | IBM TECHNICAL DISCLOSURE BULLETIN, vol. 17, no. 9, February 1975, pages 2570,2571, New York, US; T.S. MERENESS: "Bicycle tachometer/speedometer" * Entire document; figure 1 * | 1,2 | G 01 P 3/489 |
| Y | EP-A-0 095 040 (FLASCH et al.) * Page 11, lines 9-34; figures 1,9-12 * | 1,2 | |
| A | US-A-4 605 240 (CLEM et al.) * Column 2, lines 43-65; column 3, lines 17-32; figures 1,5 * | 1 | |

TECHNICAL FIELDS SEARCHED (Int. Cl.5)

G 01 P

The present search report has been drawn up for all claims

| Place of search | Date of completion of search | Examiner |
|---|---|---|
| The Hague | 11 March 91 | HANSEN P. |